# EUROPEAN PATENT APPLICATION

(11) **EP 4 269 641 A1**
(43) Date of publication of application: **01.11.2023**
(21) Application number: 21911661.3
(22) Date of filing: 26.11.2021
(51) Int. Cl.: C22C 21/02, B22F 1/00, B22F 10/28

(54) **POWDERED MATERIAL WITH HIGH HEAT CONDUCTIVITY**

(30) Priority: 26.12.2020 RU 2020143201
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, g. Krasnoyarsk, 660111 (RU); VAKHROMOV, Roman Olegovich, g. Krasnoyarsk, 660111 (RU); NYAZA, Kirill Vyacheslavovich, g. Krasnoyarsk, 660111 (RU); KOROLEV, Vladimir Aleksandrovich, g. Krasnoyarsk, 660111 (RU)
(74) Representative: Atalay, Baris
(86) International application number: PCT/RU2021/050395
(87) International publication number: WO 2022/139629

(57) **Abstract**

The invention relates to metallurgy, namely to aluminium-alloy-based powder materials based used for producing parts by additive technology, including selective laser melting. An aluminium powder material, containing silicon, iron, magnesium and zirconium, is proposed, subject to the Si ≥ Mg * 6.5 + Fe * 5 condition. The technical result is an increase in the strength and thermal conductivity characteristics of the aluminium alloy for producing parts by the powder technology, including additive technology, while maintaining the strength characteristics corresponding to medium-strength aluminium alloys.

## Description

The invention relates to metallurgy, notably to aluminium alloy powder materials used to produce parts by additive technologies.

Additive manufacturing is increasingly being used to produce parts from metal powder materials. Selective laser melting (SLM) is the most widely used additive technology to produce metal parts. The key advantages of additive technology over traditional aluminium alloy production technology are: shorter times to produce the finished product, the ability to produce formed parts with minimal machining allowances, the ability to use topological optimisation and bionic design methods to produce parts with improved weight efficiency and the ability to use new material compositions ensuring a higher set of properties as compared to currently used serial alloys.

This has attracted the interest of companies that specialise in the production of advanced products for the aerospace and automotive industries. To ensure competitiveness and cost-effectiveness, the parts and structural elements used in these areas are subject to strict requirements regarding their weight efficiency. A heat exchanger is one of the most important devices used to ensure the operation of products of aerospace and automotive industries; its efficiency is determined by the energy conversion efficiency factor. This factor can be increased by increasing the design complexity that ensures there are more heat transfer areas and by using highly thermally conductive materials. Currently, copper is the main material of choice for heat exchangers since it has one of the highest thermal conductivity factors of 400 W/m*K. However, the high density of copper, 8.9 g/cm³, does not meet the stringent weight efficiency requirements for highly competitive products. The use of aluminium alloys with a density of 2.7 g/cm³ and thermal conductivity of 200 W/m*K and the use of additive technology that allows for the production of complex structures with an increased number of heat exchange areas, can reduce the weight of heat exchangers in aerospace and automotive vehicles up to 10 times as compared to copper.

The AlSi10Mg alloy is currently the most widely used aluminium alloy for the SLM technology; it contains from 9 to 11% wt. silicon and from 0.20 to 0.60 wt% magnesium (see Process optimisation and microstructural analysis for selective laser melting of AlSi10Mg. K. Kempen, L. Thijs, E. Yasa, M. Badrossamay, W. Verheecke, JP. Kruth. Solid Freeform Fabrication Symposium Conference, Vol.22, Pages. 484-495, 2011).

This material is a medium-strength aluminium alloy (tensile strength: 320 MPa, yield strength: 210 MPa) with good castability and low tendency for hot-cracking, which makes it suitable for the SLM processes. However, the high silicon content reduces the thermal conductivity of this alloy to 160 W/m*K.

For heat exchanger parts designed to dissipate heat from the heat transfer medium, operating at temperatures in the range up to 200 °C, materials with a higher thermal conductivity factor are required, while the strength characteristics of the material should match those of medium-strength aluminium alloys.

An aluminium alloy is known (JP 2008308760A, published on December 25, 2008), containing the following components (wt%):

| | |
|---|---|
| Silicon | from 0.3 to 1.2; |
| Iron | from 0.7 to 2.0; |
| Manganese | from 0.2 to 0.8; |
| Zinc | from 0.1 to 1.0; |
| Scandium | from 0.0001 to 1.0; |
| Copper | from 0.05 to 0.8; |
| Magnesium | from 0.01 to 0.05; |
| Zirconium | from 0.001 to 0.3; |
| Titanium | from 0.01 to 0.25; |
| Chromium | from 0.01 to 0.1; |
| Vanadium | from 0.01 to 0.1; |
| Aluminium | the rest. |

The sufficient strength of this alloy is achieved by, among other things, solid-solution hardening with the addition of various elements. However, the high amount of elements in the solid solution results in a significant reduction of the thermal conductivity factor to 160 W/m*K.

An aluminium-manganese alloy is known (JP 2004176091A, published on June 24, 2004), containing the following components (wt%):

| | |
|---|---|
| Manganese | from 2.0 to 3.0; |
| Silicon | from 0.8 to 1.5; |
| Iron | from 0.05 to 0.4; |
| Zinc | from 0.1 to 3.0; |
| Nickel | from 0.01 to 1.0; |
| Zirconium | from 0.01 to 0.3; |
| Titanium | from 0.01 to 0.30; |
| Indium | from 0.001 to 0.2; |
| Tin | from 0.01 to 0.5; |
| Aluminium | the rest. |

The alloy is designed to be used in automotive heat exchangers and has good thermal conductivity. However, the main disadvantage of this alloy is its insufficiently high strength characteristics (σ_{b}=145 MPa), so it cannot be considered as a heat exchanger material for the aerospace industry. In addition, the alloy contains zinc, which has high vapour pressure, so the alloy is partially lost in the SLM process and, as a result, its strength properties will be reduced.

An aluminium-iron alloy is known (JP 5301750B1, published on September 25, 2013), containing the following components (wt%):

| | |
|---|---|
| Copper | from 0.00 to 2.30; |
| Iron | from 1.20 to 2.60; |
| Silicon | from 0.00 to 1.50. |

The advantages of this alloy include its high thermal conductivity while maintaining the strength characteristics of medium-strength aluminium alloys. The main disadvantage of this alloy is its low processability when producing products using the SLM method due to the wide solidification range with this content of alloying elements. In addition, the high iron and copper content of the alloy has a negative effect on the corrosion resistance of the material, which significantly reduces the service life of parts made from this alloy in corrosive environments.

An aluminium-magnesium-silicon alloy is known (RU2014110911A, published on September 27, 2015), containing the following components (wt%):

| | |
|---|---|
| Silicon | from 1.0 to 4.0; |
| Magnesium | from 1.7 to 8.0; |
| Scandium | from 0.1 to 0.5; |
| Cobalt | from 0.3 to 0.6; |
| Titanium/zirconium | from 0.2 to 1.2; |
| Iron (maximum) | 0.4; |
| Aluminium | the rest. |

The alloy has high mechanical characteristics thanks to solid-solution and precipitation hardening. The main disadvantage of the alloy is its high magnesium content, which impairs the alloy processability during SLM since it can cause a change in the chemical composition of the fused material compared to the original powder due to slag in the SLM process. In addition, the alloy has low castability, which increases the likelihood of defects during the SLM process due to thermal stresses resulting in hot cracks during the fusion. This alloy also contains scandium, a costly alloying element, which reduces the economic viability of the alloy.

An aluminium-silicon-copper alloy is known (DE112004001160B4, published on January 10, 2008), containing the following components (wt%):

| | |
|---|---|
| Silicon | from 11.25 to 11.75; |
| Iron | from 0.35 to 0.65; |
| Copper | from 1.75 to 2.75; |
| Magnesium | from 0.15 to 0.3; |
| Manganese | from 0.42 to 1.2; |
| Zinc | maximum 0.5; |
| Titanium | maximum 0.2; |
| Strontium | from 0.01 to 0.03. |

The manganese/iron ratio is 1.2/1.75.

The mechanical properties of the alloy are equal to those of medium-strength aluminium alloys (310 MPa). Due to the presence of more than 1 wt% copper in the alloy, the alloy has a tendency to pitting corrosion. In addition, the overall high alloying nature of the alloy leads to a significant reduction of its thermal conductivity.

An aluminium-magnesium-silicon alloy is known (EP1167560A1, published on January 2, 2002), containing the following components (wt%):

| | |
|---|---|
| Magnesium | from 1.0 to 2.6; |
| Silicon | from 0.5 to 2.0; |
| Iron (maximum) | 0.5; |
| Copper (maximum) | 1.0; |
| Zinc (maximum) | 0.30; |
| Titanium (maximum) | 0.20; |
| Beryllium (maximum) | 0.003. |

This alloy has low mechanical characteristics (tensile strength: 230 MPa, yield strength: 140 MPa when cast), which is due to insufficient alloying with elements that ensure dispersion hardening.

An aluminium-silicon-copper alloy is known (US8758529B2, published on June 24, 2014), containing the following components (wt%):

| | |
|---|---|
| Silicon | from 0.5 to 14; |
| Copper | from 0.25 to 2.0; |
| Nickel | from 0.1 to 3.0; |
| Iron | from 0.1 to 1.0; |
| Zinc | from 0.1 to 2.0; |
| Magnesium | from 0.1 to 1.0; |
| Silver | from 0 to 1.0; |
| Strontium | from 0 to 0.2; |
| Manganese | from 0 to 1.0; |
| Calcium | from 0 to 0.5; |
| Germanium | from 0 to 0.5; |
| Tin | from 0 to 0.5; |
| Cobalt | from 0 to 0.5; |
| Titanium | from 0 to 0.2; |
| Boron | from 0 to 0.1; |
| Cadmium | from 0 to 0.3; |
| Chromium | from 0 to 0.3; |
| Indium | from 0 to 0.5; |

and at least one of the following elements:

| | |
|---|---|
| Scandium | from 0 to 0.1; |
| Zirconium | from 0.1 to 0.2; |
| Yttrium | from 0.25 to 0.5. |

This alloy has high mechanical characteristics which are ensured by two hardening types: solid-solution and precipitation hardening. However, the disadvantage of this alloy is its low thermal conductivity, which is due to the high alloying nature of the solid solution and the large number of phases released during the heat treatment. The high copper content in this alloy is another major disadvantage of this alloy since it makes the material prone to pitting corrosion.

An aluminium-based alloy (US20050106410A1, published on May 19, 2005) is the closest to the claimed one; it contains the following elements (wt%):

| | |
|---|---|
| Silicon | from 0.1 to 1.5; |
| Iron | from 0.1 to 0.6; |
| Copper | from 0.0 to 1.0; |
| Magnesium | from 0.0 to 0.4; |
| Manganese | from 0.7 to 1.8; |
| Zinc | from 0.1 to 3.0; |
| Titanium | from 0.0 to 0.3; |
| Zirconium | from 0.0 to 0.3; |
| Aluminium | the rest. |

The disadvantage of this alloy is its low mechanical properties (ultimate tensile strength: 204 MPa, yield strength: 190 MPa). Another disadvantage of the alloy is its zinc content, since zinc is prone to loss during SLM due to its high vapour pressure. The manganese content in the presence of magnesium and iron can lead to the formation of a plate-like Al₆(Mn, Fe) phase, which significantly reduces thermal conductivity. Another disadvantage is the presence of copper in the alloy composition, which increases the alloy crystallisation interval and results in hot cracking during the SLM process.

The technical problem of the invention is to develop an aluminium powder material with high thermal conductivity and mechanical characteristics corresponding to medium-strength aluminium alloys for producing parts of heat exchangers and radiators by additive technology while ensuring there are no hot cracks and large pores in the fused material.

The technical result is to increase the thermal conductivity characteristics of the aluminium alloy and to improve the strength characteristics to be able to produce parts using additive production technology.

This problem is solved and the result is achieved by proposing a new aluminium powder material containing elements in the following proportions (wt%):

| | |
|---|---|
| Silicon | from 2.00 to 6.00; |
| Iron | from 0.10 to 0.50; |
| Magnesium | from 0.10 to 0.80; |
| Zirconium | from 0.10 to 0.40; |
| Copper | maximum 0.02; |
| Manganese | maximum 0.02; |
| Titanium (maximum) | 0.02; |
| Aluminium and unavoidable impurities | the rest. |

The following ratio for silicon, magnesium and iron content would be appropriate: Si > Mg * 6.5 + Fe * 5.

We also offer an item produced using the additive technology from the abovementioned aluminium powder material, having ultimate tensile strength over 290 MPa and tensile yield strength over 210 MPa, with elongation over 8% and thermal conductivity over 190 W/m*K.

It is possible to produce the powder using the following technology:
- Preparation of an aluminium-based melt with the control of the required chemical composition;
- Refining of the aluminium melt and overheating of at least 100 °c above the liquidus temperature;
- Gas atomisation of the aluminium melt with the gas being nitrogen, argon or their mixture;
- Separation of the required fraction of the powder.

The silicon content was chosen based on the need for high castability of the material to ensure processability when making products using the SLM method and to ensure a sufficient level of thermal conductivity of the material.

The magnesium additive increases the alloy strength through the formation of the Mg₂Si phase during the heat treatment hardening.

Iron alloying contributes to the formation of insoluble intermetallic inclusions based on aluminium, silicon and iron, which ensures additional hardening and increases the thermal stability of the alloy, and also contributes to the depletion of the aluminium matrix by alloying elements, which results in increased thermal conductivity.

Zirconium is introduced to form the finely dispersed Al₃Zr phase during the decomposition of the supersaturated solid solution when performing heat treatment. Zirconium has a low diffusion coefficient in the aluminium matrix, which results in the formation of nanoscale phases during high-temperature ageing, having little effect on thermal conductivity due to their size. Since the phase is coherent with the aluminium matrix, a strong hardening effect can be achieved. The zirconium content is chosen so as to avoid the formation of large intermetallic compounds in the fused material, which would result in a significant reduction in the hardening effect and thermal conductivity.

Experimentailly it was unexpectedly shown that a ratio of iron, silicon and magnesium in the alloy, Si ≥ Mg * 6.5 + Fe * 5, ensures there is the optimum combination of strength, ductility and thermal conductivity of the printing material. This ratio of alloying elements ensures there is the optimum amount of hardening phase and optimum composition of the solid solution. If the magnesium and iron contents are exceeded, the material has lower elongation and yield strength due to excess iron and magnesium in the solid solution, which also contributes to lower thermal conductivity of the material.

Example 1 below shows the alloy properties when this ratio is met; Example 2 shows the results of a material study at Si < Mg * 6.5 + Fe * 5.

The proposed alloy has a limited content of manganese, copper and titanium. To form manganese-based intermetallic phases, it requires high-temperature treatment.

High-temperature treatment will reduce the hardening effect of Mg₂Si and Al₃Zr due to their growth, which will negatively affect the thermal conductivity and strength characteristics of the alloy.

Another disadvantage of manganese being present in an iron-containing aluminium alloy is the formation of a coarse non-spherical phase (MnFe)Al₆ (during heat treatment), which has a negative effect on thermal conductivity.

The upper level of the copper and titanium content in the alloy is limited in order to narrow down the solidification range of the alloy. In addition, the titanium content is limited so as not to significantly reduce the thermal conductivity of the alloy.

The figures show:

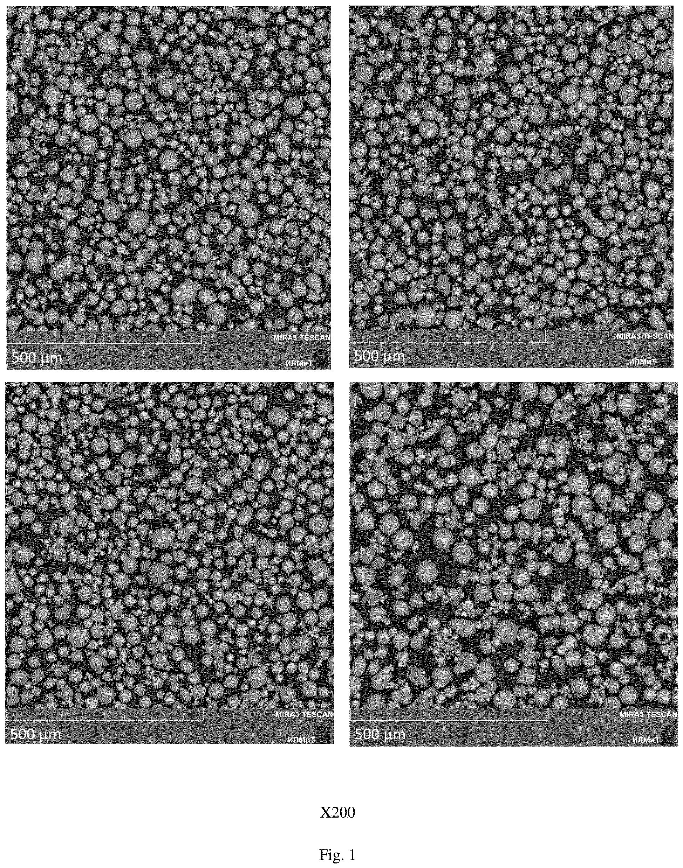

Fig. 1: Powder particles of compositions 2, 3, 4 and 6 of the proposed alloy obtained by atomisation of the melt into a gas stream from invention embodiment example 1.

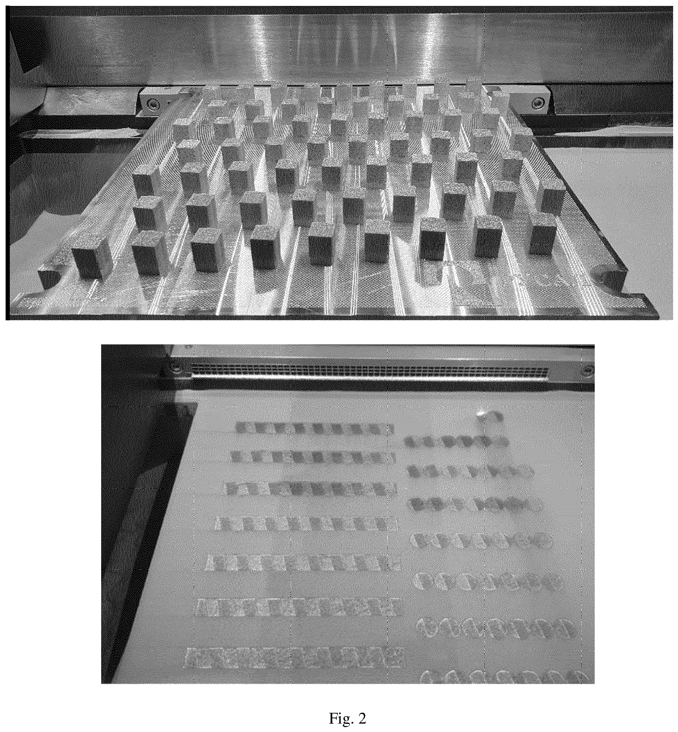

Fig. 2: Selective laser melting process and appearance of the fused samples.

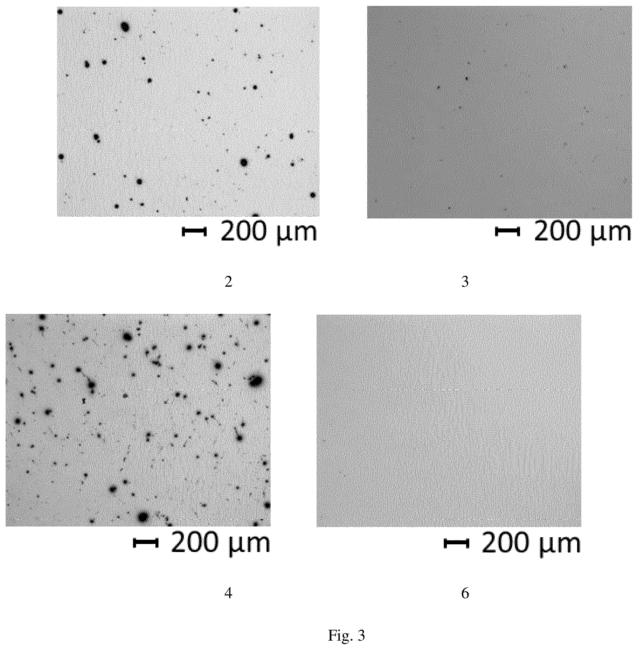

Fig. 3: Images of structures of sample compositions 2, 3, 4 and 6 from invention embodiment example 1.

The proposed invention is explained by the following examples.

### Example 1

The alloy was prepared in the following sequence:
Aluminium was melted and heated to a temperature of 800-810 °C. Then it was alloyed with crystalline silicon. Iron was introduced as the Fe80F20 tablets (80% Fe, 20% flux) at 720 to 740 °C.

Then the melt was heated to 780 °C. The A115Zr master alloy was added, followed by an incubation for 1 hour while stirring every 15 to 20 minutes.

After the soaking, the slag was removed. After removing the slag, a carnallite flux was loaded onto the melt surface at a rate of 2 kg/t. After the flux had melted, magnesium was injected underneath the flux layer.

The magnesium injection was followed by soaking of 60 minutes while stirring every 15 minutes.

After soaking, the slag was removed from the melt surface and samples were taken to control the chemical composition.

The spherical powders were produced by atomisation the melt through an ejector nozzle. A nitrogen-oxygen mixture was used as an atomisation gas, with the oxygen content in the mixture being no more than 0.8 vol. %.

The resulting pulverised volumes were subjected to gas-dynamic separation and sieving in order to separate out the target fraction of 20 to 63 µm.

As a result, powders were produced with the chemical compositions shown in Table 1.

**Table 1**

| Composition No | Al | Si | Fe | Mg | Zr | Cu | Mn | Ti | Zn |
|---|---|---|---|---|---|---|---|---|---|
| 1 | Base | 4.6 | 0.4 | 0.4 | 0.10 | 0.0030 | 0.0016 | 0.0044 | - |
| 2 | | 4.9 | 0.2 | 0.6 | 0.4 | 0.0027 | 0.0030 | 0.0047 | - |
| 3 | | 3.83 | 0.35 | 0.32 | 0.3 | 0.0020 | 0.0027 | 0.0035 | - |
| 4 | | 4.98 | 0.33 | 0.51 | 0.35 | 0.0028 | 0.0030 | 0.0030 | - |
| 5 | | 2.63 | 0.2 | 0.25 | 0.15 | 0.0030 | 0.0030 | 0.0050 | - |
| 6 | | 4.35 | 0.35 | 0.4 | 0.20 | 0.0025 | 0.0030 | 0.0050 | - |
| Prototype | | 0.75 | 0.45 | 0.05 | 0.14 | 0.1000 | 1.5500 | 0.1350 | 1.950 |

The resulting powders were used to make samples by SLM. To make the samples, an EOS M290 SLM printer was used. The samples were produced by varying the laser power within the range of 220 to 350 W and the scanning speed of 450 to 1,000 mm/s.

The quality of the obtained samples was determined by qualitative and quantitative metallography. These polished sample were produced using standard technology; the microstructure was analysed on the uncoated surface with an inverted metallographic microscope.

In order to determine strength and thermal conductivity characteristics, sample blanks were fused. The fused sample blanks were machined in accordance with GOST 1497-84. The thermal conductivity was determined using the laser flash method with the LFA 467 apparatus. Tensile tests were performed in accordance with GOST 1497-84.

The samples were analysed after ageing at 300 °C for 1 hour. The results are given in Table 2.

**Table 2**

| Composition No | Tensile strength, MPa | Yield strength, MPa | Elongation, % | Thermal conductivity, W/(m*K) | |
|---|---|---|---|---|---|
| | | | | Before heat treatment | After heat treatment |
| 1 | 260 | 195 | 13.5 | 180 | 181 |
| 2 | 270 | 200 | 8.0 | 163 | 183 |
| 3 | 300 | 215 | 11.0 | 160 | 192 |
| 4 | 265 | 205 | 8.7 | 167 | 179 |
| 5 | 255 | 210 | 10 | 175 | 182 |
| 6 | 310 | 220 | 9.0 | 176 | 176 |
| Prototype | 204 | 190 | 23.0 | 140 | 156 |

The material is characterised by a 23% increase in thermal conductivity and a 41% increase in tensile strength as compared to the prototype.

The aluminium powder material with the proposed chemical composition has an increased thermal conductivity, tensile strength and yield strength as compared to the prototype.

### Example 2

The aluminium alloy powders of the chemical composition shown in Table 3 were prepared using the process described in Example 1. The alloys differed in the ratio of silicon, iron and magnesium.

**Table 3**

| Composition No | Al | Si | Fe | Mg | Zr | Cu | Mn | Ti |
|---|---|---|---|---|---|---|---|---|
| 1 | Base | 3.5 | 0.34 | 0.45 | 0.21 | 0.0029 | 0.0028 | 0.0037 |
| 2 | | 4.2 | 0.42 | 0.4 | 0.24 | 0.0025 | 0.0021 | 0.0028 |
| 3 | | 3.8 | 0.27 | 0.45 | 0.23 | 0.0022 | 0.0019 | 0.0033 |
| 4 | | 4.5 | 0.46 | 0.4 | 0.24 | 0.0038 | 0.0035 | 0.0041 |
| 5 | | 4.3 | 0.39 | 0.45 | 0.22 | 0.0023 | 0.0027 | 0.0039 |
| 6 | | 3.9 | 0.3 | 0.4 | 0.23 | 0.0028 | 0.0028 | 0.0029 |

To make the samples, an EOS M290 SLM unit was used. The fused samples (cylinders 80 mm long and 12 mm in diameter) were machined into samples for tensile testing in accordance with GOST 1497-84, as well as for thermal conductivity testing. The thermal conductivity was determined on circular samples using the laser flash method with the LFA 467 apparatus. Tensile tests were performed in accordance with GOST 1497-84. The samples were analysed after ageing at 300 °C for 45 minutes.

Table 4 shows the tensile test results according to GOST 1497-84 for samples with chemical composition according to Table 3 after heat treatment and the results of thermal conductivity analysis before and after heat treatment.

**Table 4**

| Composition No | Tensile strength, MPa | Yield strength, MPa | Elongation, % | Thermal conductivity, W/m*K | |
|---|---|---|---|---|---|
| | | | | Before heat treatment | After heat treatment |
| 1 | 220 | 195 | 10.3 | 157 | 168 |
| 2 | 215 | 203 | 9.0 | 163 | 171 |
| 3 | 223 | 207 | 8.8 | 153 | 165 |
| 4 | 219 | 215 | 7.4 | 159 | 170 |
| 5 | 227 | 209 | 8.7 | 161 | 169 |
| 6 | 214 | 200 | 9.5 | 148 | 160 |
| Prototype | 204 | 190 | 23.0 | 140 | 156 |

Thus, the aluminium powder material with the proposed chemical composition has increased thermal conductivity, tensile strength and yield strength as compared to the prototype.

The formation of the Mg₂Si and Al₃Zr dispersoids, as well as multicomponent inclusions based on iron, aluminium and silicon, has improved the strength characteristics of the alloy. Heat treatment (ageing) by reducing the solid solution concentration with the formation of small round inclusions allowed for an increased thermal conductivity. However, at Si < Mg * 6.5 + Fe * 5, the properties are lower as compared to the alloys with the chemical composition shown in Table 1 and corresponding to the Si ≥ Mg * 6.5 + Fe * 5, since there is a high Mg and Fe content in the aluminium matrix.

Thus, the proposed invention provides improved strength and thermal conductivity characteristics of an aluminium alloy for producing parts using additive technology while maintaining high elongation.

## Claims

1. Aluminium powder material for the production of parts using additive technology with improved strength and thermal conductivity characteristics while maintaining high elongation, containing silicon, iron, magnesium and zirconium, with the following component ratio (wt%):
| | |
|---|---|
| Silicon | from 2.00 to 5.00; |
| Iron | from 0.10 to 0.50; |
| Magnesium | from 0.10 to 0.80; |
| Zirconium | from 0.10 to 0.40; |
| Copper | maximum 0.02; |
| Manganese | maximum 0.02; |
| Titanium | maximum 0.02; |
| Aluminium and unavoidable impurities | the rest, |
while the ratio of silicon, iron and magnesium in the alloy corresponds to the Si ≥ Mg * 6.5 + Fe * 5 condition.

2. An aluminium powder material product according to Claim 1, having tensile strength over 290 MPa, yield strength over 210 MPa, elongation over 8% and thermal conductivity over 190 W/m*K.
